# DEMANDE DE BREVET EUROPEEN

(11) **EP 0 948 989 A1**
(43) Date de publication de la demande: **13.10.1999**
(21) Numéro de dépôt: 99400758.1
(22) Date de dépôt: 29.03.1999
(51) Int. Cl.: B01D 53/053, C01B 13/02

(54) **Procédé et unité de production d'oxygene par adsorption avec cycle court**

(30) Priorité: 07.04.1998 FR 9804305
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Derive, Nathalie, 75010 Paris (FR); Dubois, Anne, 78150 Le Chesnay (FR); Monereau, Christian, 75011 Paris (FR)
(74) Mandataire: Le Moenner, Gabriel

(57) **Abrégé**

Le cycle mis en oeuvre est du type transatmosphérique avec utilisation d'une capacité-tampon de production (C1), et avec une phase de purge/élution au voisinage de la pression basse, dans laquelle on introduit à contre-courant dans l'adsorbeur (A, B) du gaz issu d'un autre adsorbeur en phase de première décompression à co-courant et, simultanément, on poursuit le pompage à contre-courant.

Au cours de l'étape de production, on envoie également l'oxygène produit dans une capacité auxiliaire (C2), et le gaz contenu dans cette capacité auxiliaire est, vis-à-vis de l'adsorbeur, utilisé uniquement au cours d'une fraction de la phase de pressurisation de l'adsorbeur.

## Description

La présente invention est relative à un procédé de production d'oxygène à partir d'air par adsorption à variation de pression transatmosphérique, du type dans lequel, au moyen d'une unité comportant au moins deux adsorbeurs, on met en oeuvre dans chaque adsorbeur un cycle de durée T comprenant, successivement et cycliquement :
- une phase (a) de pressurisation jusqu'à la pression haute du cycle au moyen d'oxygène de production introduit à contre-courant et/ou d'air introduit à co-courant, cette phase se terminant par une étape de production à co-courant dans laquelle l'oxygène produit est envoyé à un volume tampon;
- une phase (b) de première décompression à co-courant;
- une phase (c) de purge à contre-courant comprenant un pompage jusqu'à la pression basse Pm du cycle; et
- une phase (d) de purge/élution dans laquelle on introduit à contre-courant du gaz issu d'un autre adsorbeur en phase (b) de première décompression à co-courant et, simultanément, on poursuit le pompage à contre-courant.

Les procédés PSA (Pressure Swing Adsorption) sont de plus en plus utilisés pour produire de l'oxygène de pureté limitée à partir d'air atmosphérique. Bien entendu, une préoccupation permanente consiste à réduire le coût de l'oxygène à produire. Pour cela, on peut utiliser des adsorbants particulièrement spécifiques et performants pour la séparation O₂/N₂, tels que les zéolites échangées au lithium. Cependant, le coût de ces adsorbants est très supérieur à celui des adsorbants classiques tels que les tamis moléculaires 5A ou 13X, de sorte que leur acceptation suppose qu'une faible quantité d'adsorbants soit nécessaire.

Pour minimiser les volumes d'adsorbants à mettre en jeu, on a proposé de raccourcir le cycle, en particulier en faisant se chevaucher des étapes habituellement séquentielles. On peut ainsi introduire l'air dans l'adsorbeur au plus tôt après la fin de l'étape de purge/élution, voire immédiatement à la suite de celle-ci. Toutefois, toutes choses égales par ailleurs, cette introduction d'air en basse pression a un effet négatif sur l'avancée des fronts d'adsorption, qui progressent d'autant plus vite que la pression dans l'adsorbant est faible.

Ceci est vrai pour l'arrêt de l'azote mais également pour celui des impuretés atmosphériques (eau, CO₂, traces d'hydrocarbures,...), pour lesquelles on utilise soit un lit spécifique tel qu'un lit d'alumine ou de gel de silice, soit un adsorbant servant à la séparation O₂/N₂. Dans tous les cas, l'introduction d'air à basse pression nécessite en effet des volumes d'adsorbants plus importants, ce qui va à l'encontre du but visé.

D'autre part, l'accroissement de la zone dévolue à l'arrêt des impuretés augmente le volume d'air inutilement comprimé puis pompé, au détriment de l'énergie spécifique.

Un moyen pour limiter ces inconvénients est de minimiser la quantité d'air introduite aux pressions les plus basses en faisant en sorte que la pression dans l'adsorbeur remonte très rapidement.

C'est ainsi que suivant l'enseignement du EP 758 625 A1, Figures 4 et 5, on met en oeuvre après la purge/élution, dans un cycle du type précité dont la durée est 120 secondes, les étapes suivantes :
- une première repressurisation à contre-courant au moyen d'oxygène de décompression à co-courant de l'autre adsorbeur, pendant 2 secondes;
- une deuxième repressurisation, simultanément à co-courant par introduction d'air et à contre-courant au moyen d'oxygène de décompression à co-courant de l'autre adsorbeur, pendant 4 secondes;
- une troisième repressurisation, uniquement à co-courant par introduction d'air, la sortie de l'adsorbeur étant fermée, pendant 2 secondes; et
- une étape de repressurisation finale et de production à co-courant, pendant 44 secondes.

On est ainsi conduit à enchaîner, malgré la durée, relativement longue, du cycle, des étapes de très faibles durées -d'une seconde à quelques secondes maximum- avec dans le court laps de temps correspondant de multiples ouvertures-fermetures de vannes.

L'invention a pour but de permettre de manière simple et fiable la réalisation de cycles particulièrement courts, inférieurs à 120 secondes, typiquement inférieurs à 90 secondes, peu consommateurs en énergie.

A cet effet, l'invention a pour objet un procédé du type précité, caractérisé en ce que le volume-tampon est subdivisé en une capacité-tampon et en un volume auxiliaire comprenant une capacité auxiliaire de pressurisation, en ce qu'au cours d'une partie initiale de l'étape de production, on n'envoie l'oxygène produit que dans la capacité auxiliaire de pressurisation, et en ce que le gaz contenu dans ladite capacité auxiliaire est, vis-à-vis de l'adsorbeur, utilisé uniquement au cours d'une fraction de la phase (a) de pressurisation de l'adsorbeur.

Le procédé suivant l'invention peut comporter une ou plusieurs des caractéristiques suivantes, prises seules ou suivant toutes leurs combinaisons techniquement possibles :
- ladite fraction a une durée au plus égale à T/10, et de préférence, pour un cycle de durée avantageusement inférieur à 120 secondes, au plus égale à 10 secondes.
- pendant au moins une partie de ladite fraction, on introduit simultanément dans l'adsorbeur de l'air à co-courant;
- pendant au moins une partie, notamment une partie initiale, de ladite fraction, on envoie simultanément dans l'adsorbeur à contre-courant du gaz issu d'un autre adsorbeur en phase (b) de première décompression à co-courant;
- au cours de ladite fraction, on isole ladite capacité auxiliaire de la capacité-tampon et on met en communication cette capacité auxiliaire avec l'adsorbeur jusqu'à équilibrage des pressions entre eux;
- on réalise ledit isolement au moyen d'un clapet unidirectionnel qui permet l'écoulement d'oxygène de ladite capacité auxiliaire à la capacité-tampon mais interdit tout écoulement inverse;
- on laisse ladite capacité auxiliaire en communication avec l'adsorbeur jusqu'à la fin de la phase (a) de pressurisation, de sorte que cette capacité auxiliaire est ramenée à la pression haute du cycle.

L'invention a également pour objet une unité de production d'oxygène à partir d'air par adsorption à variation de pression transatmosphérique, destinée à la mise en oeuvre du procédé défini ci-dessus. Cette unité, du type comprenant au moins deux adsorbeurs en parallèle reliés sélectivement à un compresseur d'air, à une pompe à vide et à une capacité-tampon de production, les sorties des adsorbeurs étant reliées deux à deux par une conduite munie d'une vanne de réglage de débit, est caractérisée en ce qu'elle comprend au moins une capacité auxiliaire de pressurisation, des moyens de liaison sélective de cette capacité auxiliaire à la sortie de chaque adsorbeur, et des moyens de liaison de la capacité auxiliaire à la capacité-tampon adaptés pour mettre ces deux capacités en communication lorsque, et uniquement lorsque, la pression de la capacité auxiliaire est au moins égale à celle de la capacité-tampon.

Dans des modes de réalisation particuliers de cette unité :
- les moyens de liaison de la capacité auxiliaire à la capacité-tampon comprennent un clapet unidirectionnel;
- le volume de la ou de chaque capacité auxiliaire est inférieur à celui de la capacité-tampon.

Des exemples de mise en oeuvre de l'invention vont maintenant être décrits en regard des dessins annexés, sur lesquels :
- la Figure 1 représente schématiquement une unité de production d'oxygène conforme à l'invention;
- la Figure 2 est un diagramme qui illustre un cycle suivant l'invention mis en oeuvre au moyen de l'unité de la Figure 1; et
- la Figure 3 est un diagramme analogue illustrant une variante du cycle selon l'invention.

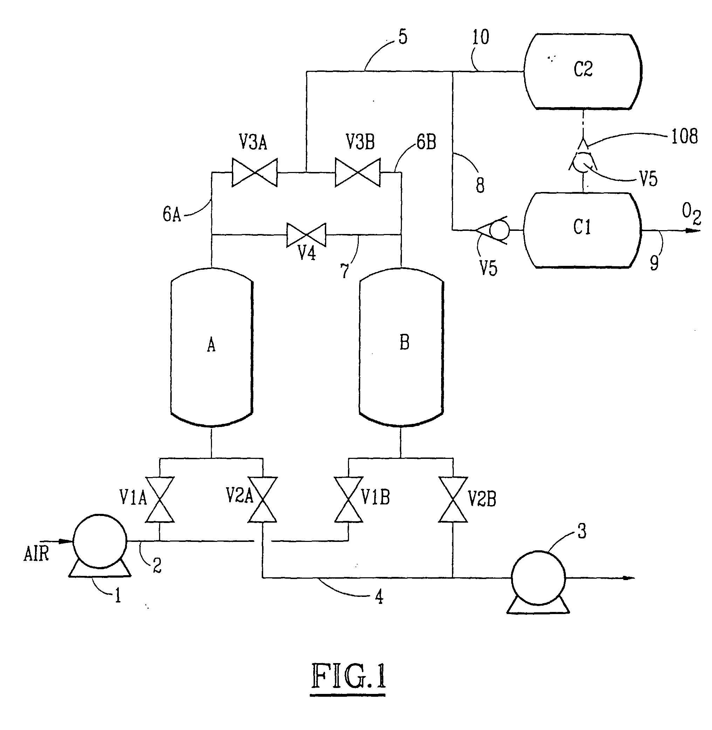

L'unité représentée à la Figure 1 est avantageuseent destinée à produire de l'oxygène à pureté limitée, typiquement de 85 à 95%, à partir d'air atmosphérique par adsorption PSA transatmosphérique.

Cette unité comprend, dans l'exemple représenté : un compresseur d'air 1; deux adsorbeurs A et B; une ligne 2 d'alimentation en air des adsorbeurs, laquelle relie le refoulement du compresseur aux extrémités inférieures ou entrées des adsorbeurs via des vannes respectives V1A et V1B; une pompe à vide 3 dont le refoulement est relié à l'atmosphère environnante; une ligne 4 d'évacuation qui relie l'aspiration de la pompe à vide aux entrées des adsorbeurs via des vannes respectives V2A et V2B; et une ligne 5 de circulation d'oxygène reliée à l'extrémité supérieure ou sortie de chaque adsorbeur par des embranchements respectifs 6A et 6B équipés de vannes respectives V3A et V3B. Les sorties des deux adsorbeurs sont en outre reliées entre elles par une conduite 7 de purge/élution équipée d'une vanne V4 de réglage de débit.

Vers l'aval, la ligne 5 se divise :
- en une conduite de production 8 équipée d'un clapet anti-retour V5 et débouchant dans une capacité-tampon de production C1 de volume relativement grand, de laquelle part la conduite 9 de fourniture d'oxygène, et
- en une conduite 10 débouchant dans une capacité auxiliaire de repressurisation C2, de volume relativement faible.

Le clapet anti-retour V5 autorise la circulation d'oxygène d'un adsorbeur ou de la capacité C2 à la capacité C1, mais interdit toute circulation inverse de C1 vers un adsorbeur ou vers la capacité C2.

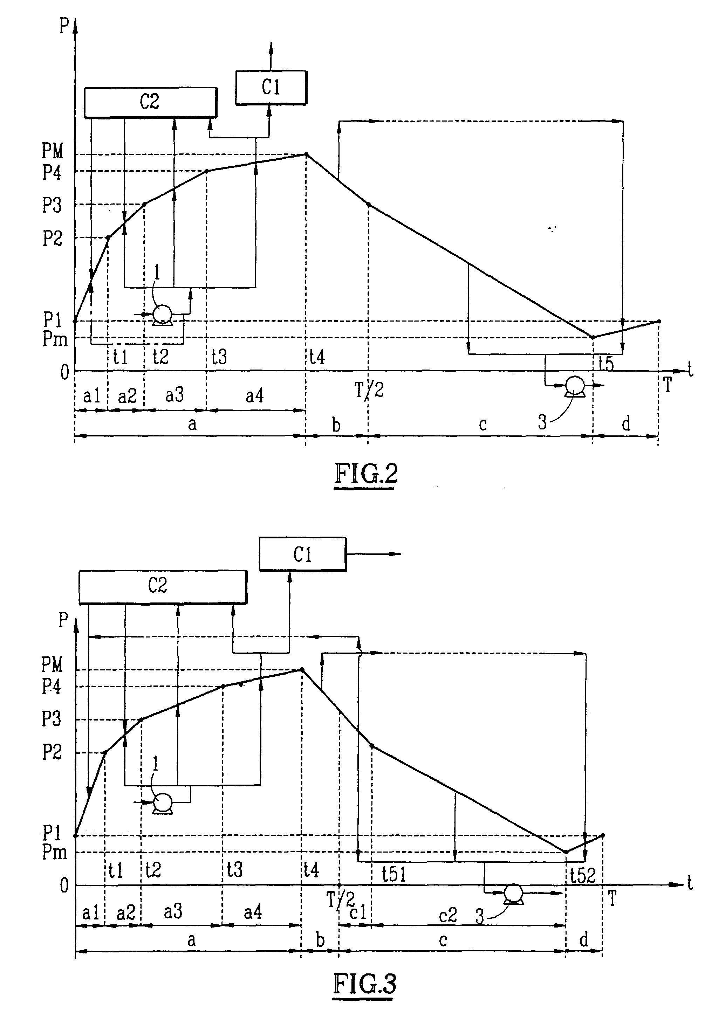

L'unité comporte par ailleurs des moyens, connus en soi et non représentés, de commande, de régulation et d'alimentation électrique, adaptés pour effectuer le cycle illustré sur la Figure 2.

Sur la Figure 2, où les temps t sont portés en abscisses et les pressions absolues P en ordonnées, les traits orientés par des flèches indiquent les mouvements et destinations des courants gazeux et leurs sens de circulation vers et dans l'adsorbeur.

Le cycle de la Figure 2, de durée T inférieure à 90 secondes, comprend les étapes successives suivantes. Ces étapes sont décrites pour l'un des adsorbeurs, par exemple l'adsorbeur A. L'adsorbeur B subit les mêmes étapes, avec un décalage dans le temps de T/2, où T désigne la durée du cycle.
(a) De t = 0 à t4<T/2, une phase de pressurisation constituée des étapes suivantes :
   (a1) Les vannes V1A, V2A et V4 étant fermées, la vanne V3A est ouverte. L'adsorbeur subit alors, de t=0 à t1, une première repressurisation de la pression de fin de purge/élution P1, légèrement supérieure à la pression basse Pm du cycle, à une première pression intermédiaire P2. Cette première repressurisation s'effectue uniquement à contre-courant avec de l'oxygène provenant de la capacité C2.
      Dès le début de cette étape, la pression de la capacité C2 devient inférieure à celle de la capacité C1, ce qui provoque la fermeture du clapet V5 et isole donc la capacité C1.
   (a2) De t1 à t2, on ouvre en outre la vanne V1A. Il se produit donc une deuxième pressurisation, à la fois à contre-courant par de l'oxygène provenant de la capacité C2 et à co-courant par de l'air. Cette étape se termine à l'instant t2 où les pressions de l'adsorbeur et de la capacité C2 sont égales à une deuxième pression intermédiaire P3. A cet instant, le flux d'oxygène s'inverse dans la conduite 5 sans qu'aucune vanne soit manoeuvrée, et on passe à l'étape suivante (a3).
   (a3) De t2 à t3, c'est l'ensemble A + C2 qui monte en pression, avec une vitesse de montée en pression d'autant plus grande que le volume de la capacité C2 est plus petit. Cette étape se termine à l'instant t3 auquel la pression de la capacité C2 est égale à celle de la capacité C1, soit à une troisième pression intermédiaire P4. A cet instant, le clapet V5 s'ouvre de lui-même, et on passe à l'étape suivante (a4).
   (a4) De t=3 à t4, c'est l'ensemble A + C1 + C2 qui monte en pression de la pression P4 à la pression haute du cycle PM. Le volume de la capacité C1 est choisi suffisamment grand pour assurer une production continue sous une pression minimale satisfaisante P4. Ce volume est généralement supérieur à celui de la capacité C2, par exemple dans un rapport compris entre 1 à 1,3 et 1 à 2.La montée en pression de P4 à PM est nettement plus lente que dans l'étape (a3), d'autant plus que de l'oxygène de production est simultanément soutiré de la capacité C1.

   L'unité décrite ci-dessus permet ainsi, sans autre mouvement de vanne côté oxygène que l'ouverture de la vanne V3A, d'assurer une pressurisation très rapide à l'oxygène suivie d'une montée rapide en pression jusqu'à ce que la pression minimale de production soit atteinte, suivie enfin d'une montée lente en pression pendant la phase de production.
   Le cycle se continue de façon classique par les phase suivantes.
(b) De t4 à T/2, une phase de première dépressurisation à co-courant, le gaz issu de l'adsorbeur étant envoyé à l'autre adsorbeur en cours de phase purge/élution (d) décrite plus loin.
(c) De T/2 à t5, une phase de dépressurisation à contre-courant par pompage au moyen de la pompe 3, jusqu'à atteindre la pression basse Pm du cycle.
(d) De t5 à T, une phase de purge/élution au cours de laquelle l'adsorbeur reçoit à contre-courant le gaz issu de l'autre adsorbeur en phase (b) de première dépressurisation à co-courant, et est simultanément évacué à contre-courant par pompage au moyen de la pompe 3. Au cours de cette phase, la pression remonte légèrement de Pm à P1.

On peut, en variante, introduire de l'air à co-courant dès l'étape (a1), c'est-à-dire dès l'instant t = 0, comme illustré en trait mixte sur la Figure 2. En variante également, on peut au contraire ne commencer l'introduction de l'air qu'à l'instant t2, correspondant à l'équilibrage complet des pressions entre l'adsorbeur et la capacité C2.

Dans une autre variante, illustrée sur la Figure 3, avec un cycle de durée T inférieur à 100 secondes, on accélère le début de la pressurisation à l'oxygène en injectant en outre dans l'adsorbeur, pendant l'étape (a1), une fraction du gaz issu de la décompression à co-courant de l'autre adsorbeur.

Pour cela, l'étape (c) de la Figure 1 est remplacée par les deux étapes suivantes :
(c1) De T/2 à un instant t51, une étape de deuxième dépressurisation dans laquelle du gaz est évacué à co-courant de l'adsorbeur et envoyé à la sortie de l'autre adsorbeur en étape (a1) de première repressurisation, et simultanément, du gaz est évacué à contre-courant par pompage au moyen de la pompe 3; et
(c2) de t51 à t52 < T, une étape de troisième dépressurisation jusqu'à la pression basse Pm, uniquement à contre-courant par pompage.

Corrélativement, la durée T - t52 de la phase (d) de purge/élution est réduite à celle de la première étape (b) de la dépressurisation à co-courant.

On notera qu'il est avantageux d'agir sur la phase (a) pour raccourcir le cycle, car ceci permet de conserver pour les phases (b) et (d) une durée suffisante pour que les effets cinétiques, sensibles à ces phases du cycle, ne provoquent pas de perte substantielle de performances.

En variante, l'organe V5 peut être remplacé par une vanne commandée de manière à s'ouvrir dans les mêmes conditions qu'un clapet anti-retour. De plus, comme illustré en trait mixte sur la Figure 1, on peut remplacer l'ensemble 8, V5 par une liaison directe 108, V5 entre les deux capacités C1 et C2.

Dans chacune des variantes décrites ci-dessus, les adsorbeurs sont de préférence à lit annulaire et à écoulement sensiblement radial des gaz à travers ce lit, ce qui permet de réduire les pertes de charge et donc de minimiser l'énergie spécifique.

A titre d'exemple, dans le cycle de la Figure 2, les pressions et les durées peuvent être les suivantes :

| Etape/phase | Pression finale (bar) | Durée (secondes) |
|---|---|---|
| (a1) | P2 = 0,7 à 0,9 | 1 à 3 |
| (a2) | P3 = 0,8 à 1,0 | 1 à 3 |
| (a3) | P4 = 1,0 à 1,2 | 3 à 8 |
| (a4) | PM = 1,3 à 1,5 | 6 à 16 |
| (b) | 0,9 à 1,1 | 3 à 10 |
| (c) | Pm = 0,3 à 0,5 | 12 à 30 |
| (d) | P1 = 0,5 à 0,7 | 3 à 10 |
| Durée totale du cycle : T = 30 à 80 s | | |

## Revendications

1. Procédé de production d'oxygène à partir d'air par adsorption à variation de pression transatmosphérique, du type dans lequel, au moyen d'une unité comportant au moins deux adsorbeurs (A, B), on met en oeuvre dans chaque adsorbeur un cycle de durée T comprenant, successivement et cycliquement :
- une phase (a) de pressurisation jusqu'à la pression haute (PM) du cycle au moyen d'oxygène de production introduit à contre-courant et/ou d'air introduit à co-courant, cette phase se terminant par une étape ((a3), (a4)) de production à co-courant dans laquelle l'oxygène produit est envoyé à un volume-tampon (C1, C2);
- une phase (b) de première décompression à co-courant;
- une phase (c) de purge à contre-courant comprenant un pompage jusqu'à la pression basse (Pm) du cycle; et
- une phase (d) de purge/élution dans laquelle on introduit à contre-courant du gaz issu d'un autre adsorbeur en phase (b) de première décompression à co-courant et, simultanément, on poursuit le pompage à contre-courant,
caractérisé en ce que le volume-tampon (C1, C2) est subdivisé en une capacité-tampon (C1) et en un volume auxiliaire comprenant une capacité auxiliaire de pressurisation (C2), en ce qu'au cours d'une partie initiale (a3) de l'étape ((a3), (a4)) de production, on n'envoie l'oxygène produit que dans la capacité auxiliaire de pressurisation, et en ce que le gaz contenu dans ladite capacité auxiliaire (C2) est, vis-à-vis de l'adsorbeur, utilisé uniquement au cours d'une fraction ((a1), (a2)) de la phase (a) de pressurisation de l'adsorbeur.

2. Procédé suivant la revendication 1, caractérisé en ce que ladite fraction ((a1), (a2)) a une durée au plus égale à 10 secondes, et de préférence au plus égale à T/10.

3. Procédé suivant la revendication 1 ou 2, caractérisé en ce que, pendant au moins une partie ((a2); (a1), (a2)) de ladite fraction ((a1),(a2)), on introduit simultanément dans l'adsorbeur de l'air à co-courant.

4. Procédé suivant l'une quelconque des revendications 1 à 3, caractérisé en ce que, pendant au moins une partie (a1) de ladite fraction ((a1), (a2)), on envoie simultanément dans l'adsorbeur à contre-courant du gaz issu d'un autre adsorbeur en phase (b) de première décompression à co-courant.

5. Procédé suivant l'une quelconque des revendications 1 à 4, caractérisé en ce que, au cours de ladite fraction ((a1), (a2)), on isole ladite capacité auxiliaire (C2) de la capacité-tampon (C1) et on met en communication cette capacité auxiliaire avec l'adsorbeur jusqu'à équilibrage des pressions entre eux.

6. Procédé suivant la revendication 5, caractérisé en ce qu'on réalise ledit isolement au moyen d'un clapet unidirectionnel (V5) qui permet l'écoulement d'oxygène de ladite capacité auxiliaire (C2) à la capacité-tampon (C1) mais interdit tout écoulement inverse.

7. Procédé suivant la revendication 5 ou 6, caractérisé en ce qu'on laisse ladite capacité auxiliaire (C2) en communication avec l'adsorbeur jusqu'à la fin de la phase (a) de pressurisation, de sorte que cette capacité auxiliaire est ramenée à la pression haute (PM) du cycle.

8. Unité de production d'oxygène à partir d'air par adsorption à variation de pression transatmosphérique, du type comprenant au moins deux adsorbeurs en parallèle (A, B) reliés sélectivement à un compresseur d'air (1), à une pompe à vide (3) et à une capacité-tampon de production (C1), les sorties des adsorbeurs étant reliées deux à deux par une conduite (7) munie d'une vanne de réglage de débit (V4), caractérisée en ce qu'elle comprend au moins une capacité auxiliaire de pressurisation (C2), des moyens (5, 6A, 6B, V3A, V3B) de liaison sélective de cette capacité auxiliaire à la sortie de chaque adsorbeur, et des moyens (V5) de liaison de la capacité auxiliaire à la capacité-tampon (C1) adaptés pour mettre ces deux capacités en communication lorsque, et uniquement lorsque, la pression de la capacité auxiliaire (C2) est au moins égale à celle de la capacité-tampon (C1).

9. Unité suivant la revendication 8, caractérisée en ce que les moyens (V5) de liaison de la capacité auxiliaire (C2) à la capacité-tampon (C1) comprennent un clapet unidirectionnel.

10. Unité suivant la revendication 8 ou 9, caractérisée en ce que le volume de la ou de chaque capacité auxiliaire (C2) est inférieur à celui de la capacité-tampon (C1).
